(19) **Europäisches Patentamt**
**European Patent Office**
**Office européen des brevets**

(11) **EP 2 555 070 B1**

(12) **FASCICULE DE BREVET EUROPEEN**

(45) Date de publication et mention de la délivrance du brevet:
**26.11.2014 Bulletin 2014/48**

(51) Int Cl.:
**G05D 1/00** *(2006.01)* **G05B 13/04** *(2006.01)*

(21) Numéro de dépôt: **12177713.0**

(22) Date de dépôt: **24.07.2012**

(54) **Procédé et système pour la détermination de paramètres de vol d'un aéronef.**

Verfahren und System zur Bestimmung der Flugparameter eines Luftfahrzeugs

Method and system for determining flight parameters of an aircraft.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2011 FR 1102405**

(43) Date de publication de la demande:
**06.02.2013 Bulletin 2013/06**

(73) Titulaires:
• **Airbus Opérations SAS**
  **31060 Toulouse (FR)**
• **ONERA (Office National d'Etudes et de Recherches Aérospatiales)**
  **92320 Châtillon (FR)**

(72) Inventeurs:
• **Ezerzere, Pierre**
  **31620 BOULOC (FR)**
• **Seren, Cédric**
  **31270 FROUZINS (FR)**
• **Hardier, Georges**
  **31130 BALMA (FR)**

(74) Mandataire: **Gevers France**
  **41, avenue de Friedland**
  **75008 Paris (FR)**

(56) Documents cités:
**CN-A- 101 839 719    US-A- 5 058 836**
**US-B1- 6 456 906**

EP 2 555 070 B1

**Description**

La présente invention concerne un procédé et un système pour la détermination de paramètres de vol d'un aéronef, lors d'un vol de ce dernier.

L'introduction des commandes de vol électriques et le plus grand niveau d'automatisation des avions de transport modernes ont permis d'améliorer significativement leur sécurité. Ce saut technologique a permis l'élaboration de lois de pilotage - notamment mises en oeuvre par le pilote automatique - plus sûres qui participent activement à la protection des avions, notamment lors de situations anormales, de pannes des systèmes de vol, de conditions environnementales dangereuses, etc.

Cependant, l'utilisation de nombreuses lois de pilotage a accru la dépendance des systèmes de vol aux mesures des paramètres de l'état d'un avion. En particulier, certains paramètres de vol s'avèrent désormais indispensables pour assurer le vol d'un avion, de sorte qu'il devient nécessaire de disposer de valeurs fiables de ces paramètres. Parmi les paramètres indispensables, on compte notamment les paramètres anémométriques et inertiels, leurs traitements s'effectuant par le système ADIRS (acronyme désignant « Air Data and Inertial Reference System ») qui délivre des informations portant sur la vitesse, l'altitude et les données inertielles (notamment l'attitude) de l'avion.

Actuellement, les valeurs des paramètres de vol sont établies à partir des mesures en provenance de capteurs adaptés, de sorte que la validité de ces valeurs dépend essentiellement de la validité des mesures effectuées par ces capteurs. Toutefois, dans le cas de capteurs externes, des perturbations extérieures (par exemple le givrage ou encore l'encrassement des capteurs) peuvent altérer la précision et l'exactitude des mesures effectuées par ces capteurs externes.

Aussi, afin de satisfaire aux obligations réglementaires et de sécurité imposées par les autorités de sécurité aérienne, il faut assurer la fiabilité, la précision et la disponibilité des valeurs des paramètres de vol.

Pour cela, une des solutions connues, actuellement mises en oeuvre, repose sur la redondance matérielle : il s'agit de multiplier le nombre de capteurs et de calculateurs permettant d'obtenir la valeur d'un paramètre de vol donné.

Toutefois, la détection de valeurs incohérentes et/ou erronées d'un paramètre de vol donné peut conduire, dans certains cas extrêmes, à ne considérer aucune des valeurs obtenues par les capteurs, de sorte que l'on ne dispose plus d'aucune valeur associée audit paramètre de vol considéré. Une telle absence de valeur peut provoquer un changement dans les lois de pilotage utilisées par les systèmes de vol embarqués.

C'est pourquoi, afin d'éviter les cas extrêmes d'absence totale de valeur d'un ou plusieurs paramètres, il est connu d'estimer, à l'aide d'un filtre de Kalman, au moins certains des paramètres de vol indispensables, comme l'illustre le document US5058836. Par exemple, on sait que l'angle d'incidence peut être estimé au moyen d'un filtre de Kalman configuré à partir d'équations de la mécanique du vol définissant l'évolution de l'angle d'incidence au cours d'un vol. Pour réaliser une telle estimation, le filtre de Kalman reçoit en entrée une mesure de la vitesse air (l'angle d'incidence étant intimement lié à cette dernière) - obtenue par des capteurs embarqués - et délivre, en sortie, une estimation de l'angle d'incidence.

Cependant, lorsque la valeur mesurée de la vitesse air est erronée (par exemple du fait d'une panne des capteurs), l'estimée de l'angle d'incidence s'avère également défaillante. L'estimation réalisée par filtrage de Kalman d'un unique paramètre de vol ne permet donc pas de s'affranchir d'une perturbation sur la ou les mesures des paramètres d'entrée nécessaire à l'estimation du paramètre de vol considéré, puisque, dans un tel cas, l'estimation obtenue est également erronée et donc inexploitable.

La présente invention a pour objet de remédier à ces inconvénients et, notamment, de s'affranchir d'une défaillance de mesure d'un ou de plusieurs des paramètres d'entrée du filtre de Kalman, de manière à garantir la disponibilité d'une valeur fiable du paramètre de vol considéré en sortie de ce dernier filtre.

A cette fin, selon l'invention, le procédé pour améliorer la détermination en temps réel de paramètres de vol d'un aéronef, au cours d'un vol de ce dernier, est remarquable en ce que l'on effectue les étapes suivantes :

- on sélectionne au moins deux paramètres de vol dudit aéronef à estimer;
- on identifie les équations de la mécanique du vol, associées respectivement aux paramètres de vol sélectionnés, pour lesquelles il existe un lien de dépendance entre lesdits paramètres de vol sélectionnés ;
- à partir desdites équations de la mécanique du vol identifiées associées auxdits paramètres sélectionnés, on configure un filtre de Kalman étendu, qui reçoit des valeurs de paramètres d'entrée comprenant au moins lesdits paramètres de vol sélectionnés ; et
- lors d'un vol dudit aéronef, on met en oeuvre le filtre de Kalman étendu pour qu'il délivre, en sortie, des estimations conjointes desdits paramètres de vol sélectionnés.

Ainsi, grâce à l'invention, on estime simultanément, à l'aide du filtre de Kalman étendu convenablement configuré, au moins deux paramètres de vol qui sont liées entre eux par l'intermédiaire d'équations de la mécanique du vol spécialement identifiées. On s'affranchit ainsi d'une erreur sur une ou plusieurs valeurs des paramètres d'entrée. En effet, une valeur erronée d'un paramètre d'entrée du filtre de Kalman étendu, utilisé lors de l'estimation d'un paramètre de vol sélectionné, ne provoque plus nécessairement une estimation erronée de ce dernier, puisqu'il est, grâce à l'invention, possible de reconstruire l'estimation dudit paramètre de vol sélectionné à partir, notamment, de l'estimation de l'autre paramètre de vol sélectionné, auquel il est couplé par le jeu des équations de la mécanique du vol identifiées.

En d'autres termes, la présente invention fournit une co-estimation d'au moins deux paramètres de vol préalablement sélectionnés, liés entre eux par des équations de la mécanique du vol, même lorsqu'une ou plusieurs valeurs d'entrée du filtre sont erronées. Cela garantit la disponibilité des valeurs des paramètres de vol sélectionnés mis en oeuvre dans les lois de pilotage de l'aéronef. L'invention permet donc de fournir une estimation de secours des paramètres de vol sélectionnés lorsque les capteurs de l'avion ne le permettent plus de manière classique.

De préférence, ledit filtre de Kalman étant défini par les matrices suivantes :

- la matrice de covariance R liée aux bruits de mesure associée à la matrice diagonale du bruit de mesure V ; et
- la matrice de covariance Q liée aux bruits d'évolution associée à la matrice diagonale du bruit d'évolution W,

on effectue les étapes supplémentaires suivantes :

- on vérifie que les valeurs desdits paramètres d'entrée sont admissibles ; et
- en cas de détection d'une défaillance d'une valeur d'un paramètre d'entrée, on adapte, en temps réel, la valeur courante d'au moins un des éléments d'au moins une des matrices de covariance R et Q.

Ainsi, on peut modifier les réglages du filtre de Kalman étendu par une adaptation des gains, afin de s'accommoder de pannes (lors de phénomènes extérieurs affectant le fonctionnement des capteurs embarqués à bord de l'aéronef) sur certaines mesures - obtenues par les capteurs embarqués - qui affectent les valeurs des paramètres d'entrée. En adaptant les valeurs des matrices de covariance R et Q, on fait davantage confiance soit aux mesures effectuées par les capteurs embarqués, soit aux estimations du filtre de Kalman étendu.

De préférence :

- on définit, dans une étape préliminaire, une pluralité de préréglages des matrices de covariance R et Q liées respectivement aux bruits de mesure et d'évolution, lesdits préréglages ainsi définis étant chacun associés à une valeur défaillante d'un desdits paramètres d'entrée ; et
- pour adapter la valeur courante desdites matrices de covariance Q et R liées aux bruits de mesure et d'évolution en cas de détection d'une défaillance de la valeur d'un paramètre d'entrée, on attribue le préréglage prédéfini, correspondant à la valeur défaillante détectée, aux matrices de covariance R et Q liées aux bruits de mesure et d'évolution.

En outre, en variante ou en complément, en cas de détection d'une défaillance d'une valeur d'un desdits paramètres d'entrée mesurée par un ou plusieurs capteurs embarqués à bord dudit aéronef, on substitue ladite valeur mesurée défaillante par la valeur correspondante estimée délivrée en sortie dudit filtre de Kalman étendu.

De cette façon, les mesures défaillantes ne sont plus prises en compte, par le filtre de Kalman étendu, pour estimer les paramètres de vol sélectionnés.

De plus, on peut avantageusement effectuer les étapes suivantes :

- on considère au moins un desdits paramètres de vol sélectionnés pour lequel ledit filtre de Kalman délivre une estimation ;
- on sélectionne, parmi les valeurs des paramètres d'entrée dudit filtre de Kalman, celles correspondant audit paramètre de vol considéré qui proviennent de capteurs embarqués à bord dudit aéronef ;
- on détecte une incohérence attachée à au moins une desdites valeurs sélectionnées ; et
- on détermine la valeur courante dudit paramètre de vol sélectionné à partir de la ou des valeurs sélectionnées restantes et de l'estimation dudit paramètre de vol sélectionné, en excluant la ou les valeurs incohérentes détectées.

Ainsi, la détermination de la valeur courante des paramètres de vol sélectionnés est obtenue sans référence à la ou aux valeurs mesurées incohérentes. On rajoute une information, à savoir l'estimation du paramètre de vol sélectionné considéré, pour augmenter la disponibilité de la valeur courante de ce dernier, même en cas d'indisponibilité ou d'incohérence d'une ou plusieurs valeurs mesurées correspondantes. Ainsi, on diversifie le type de valeurs permettant la détermination d'un paramètre de vol sélectionné, de manière à garantir la délivrance d'une valeur courante associée à celui-ci. En assurant la délivrance d'une valeur courante des paramètres de vol sélectionnés même en cas de panne de tous les capteurs associés (dans ce cas on peut utiliser l'estimation fournie par le filtre de Kalman étendu), on réduit le risque d'un changement des lois de pilotage faisant intervenir le paramètre de vol considéré. On augmente donc la disponibilité des lois dites normales assurant ainsi une continuité des performances de contrôle de l'aéronef.

Par ailleurs, dans une mise en oeuvre du procédé conforme à l'invention, le vecteur d'état associé audit filtre de Kalman étendu est défini par les douze états suivants :

- l'angle d'incidence $\alpha$ ;
- la vitesse dans le repère terrestre $v$;
- la vitesse par rapport au sol $V$ ;
- la vitesse de tangage $q$;
- l'assiette $\theta$ ;
- l'altitude $h$ ;
- la poussée motrice brute $T_B$;
- le biais $b_{nx}$ projeté suivant la direction correspondant à l'accélération longitudinale $nx$ ;
- le biais $b_{ny}$ projeté suivant la direction correspondant à l'accélération latérale $ny$ ;
- la vitesse du vent $W_x$ selon l'axe x du repère terrestre (x,y,z) ;
- la vitesse du vent $W_y$ selon l'axe y du repère terrestre (x,y,z) ; et
- la vitesse du vent $W_z$ selon l'axe z du repère terrestre (x,y,z).

En outre, selon cette mise en oeuvre, lesdits paramètres d'entrée du filtre de Kalman étendu comportent des paramètres inertiels, des paramètres anémométriques, des paramètres propres audit aéronef et des paramètres intermédiaires issus de modélisations embarquées.

Par ailleurs, la présente invention concerne également un système de détermination, en temps réel, de paramètres de vol d'un aéronef, au cours d'un vol de ce dernier, qui comporte un filtre de Kalman étendu apte à recevoir des valeurs de paramètres d'entrée et qui est remarquable :

- en ce que ledit filtre de Kalman étendu est configuré à partir d'équations de la mécanique de vol établissant un lien de dépendance entre au moins deux paramètres de vol dudit aéronef à estimer présélectionnés appartenant auxdits paramètres d'entrée ; et
- en ce que ledit filtre de Kalman étendu est formé pour délivrer, lors d'un vol dudit aéronef, des estimations conjointes desdits paramètres de vol sélectionnés.

De préférence, ledit filtre de Kalman est défini par les matrices suivantes :

- la matrice de covariance R liée aux bruits de mesure associée à la matrice diagonale du bruit de mesure V ; et
- la matrice de covariance Q liée aux bruits d'évolution associée à la matrice diagonale du bruit d'évolution W,

et ledit système comporte :

- des moyens pour vérifier si les valeurs desdits paramètres d'entrée du filtre de Kalman étendu sont admissibles ; et
- des moyens pour adapter en temps réel, en cas de détection, par lesdits moyens de vérification, d'une défaillance d'une valeur d'un paramètre d'entrée, la valeur courante d'au moins une des matrices de covariance R et Q.

En outre, ledit système comporte des moyens pour remplacer la ou les valeurs défaillantes par leur valeur estimée par le filtre de Kalman étendu, lorsqu'elles sont disponibles.

La présente invention concerne de plus un aéronef qui comporte au moins un système tel que décrit ci-dessus.

Les figures du dessin annexé feront bien comprendre comment l'invention peut être réalisée. Sur ces figures, des références identiques désignent des éléments semblables.

La figure 1 est le schéma synoptique d'une chaîne de commande d'une surface aérodynamique de contrôle d'un aéronef, laquelle chaîne met en oeuvre un système de détermination de paramètres de vol conforme à la présente invention.

La figure 2 est le schéma synoptique d'une unité d'estimation du système de détermination de paramètres de vol de la figure 1.

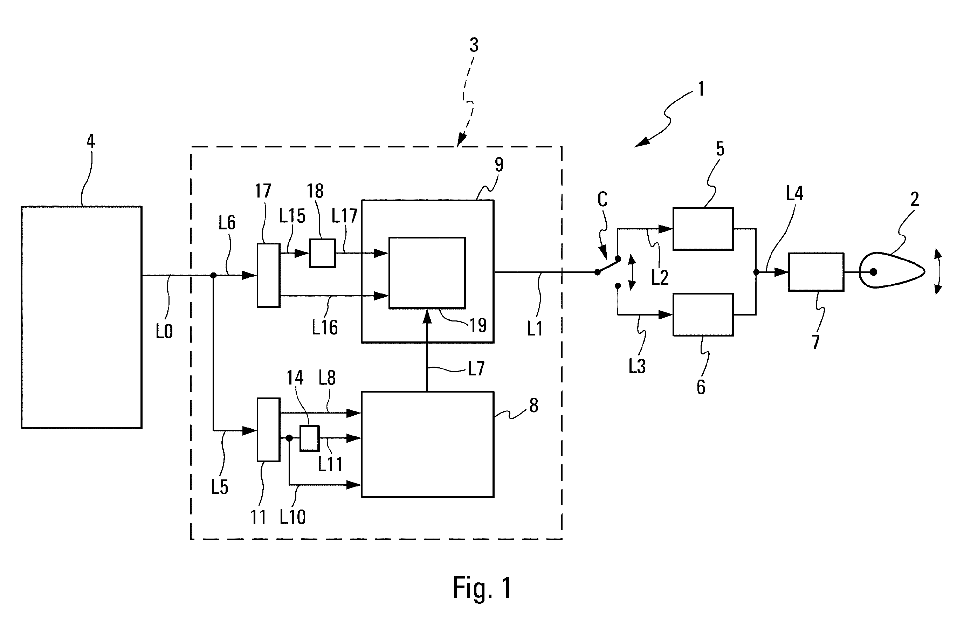

Sur la figure 1, on a représenté, de façon schématique, une chaîne de commande 1 d'une surface aérodynamique de contrôle 2 (par exemple un aileron) d'un aéronef (non représenté), chaîne dans laquelle est mis en oeuvre un système 3 de détermination, en temps réel, de paramètres de vol de l'aéronef intervenant dans l'actionnement de la surface de contrôle 2.

Comme le montre cette figure, la chaîne de commande 1 comporte :

- une unité d'informations 4, formée d'une pluralité de capteurs de mesure et de calculateurs embarqués à bord de l'aéronef, qui est susceptible de délivrer, de façon usuelle, des valeurs mesurées de paramètres de l'aéronef (tels que l'angle d'incidence, l'angle de tangage, l'angle de roulis, la vitesse air, l'altitude, etc.) ;
- le système 3 pour la détermination, en temps réel, de paramètres de vol, détaillé ci-après, qui reçoit, en entrée, les valeurs mesurées par l'unité d'informations 4, par l'intermédiaire de la liaison LO ;
- un pilote automatique 5 de l'aéronef qui met en oeuvre de nombreuses lois de pilotage pour la gestion des commandes de vol : la profondeur, les ailerons, la direction, la puissance délivrée par les moteurs, etc. A chaque loi de pilotage est associé un mode de pilotage automatique particulier du pilote automatique 5, de sorte que l'engagement des modes de pilotage automatique provoque l'activation des lois de pilotage correspondantes. Le pilote automatique 5 est apte à recevoir des valeurs de paramètres de vol qui ont été déterminées par le système de détermination 3 et transmis par l'intermédiaire de moyens de commutation C, auxquels il est relié par la liaison L2. En outre, il est capable de délivrer, en sortie, des ordres de commande à destination d'un système de commande 7 (comprenant un actionneur) de la surface de contrôle 2 ;
- des moyens de pilotage manuel 6 comportant notamment des organes de pilotage (par exemple le manche) pour contrôler l'aéronef au cours d'un vol. Ils sont aptes à recevoir des valeurs de paramètres de vol qui ont été déterminées par le système de détermination 3 et transmis par l'intermédiaire des moyens de commutation C, auxquels ils sont reliés par la liaison L3. En outre, les moyens de pilotage manuel 6 sont aptes à délivrer, en sortie, des ordres de commande à destination du système de commande 7 de la surface de contrôle 2 ;
- les moyens de commutation C reliés au système de détermination 3, au pilote automatique 5 et aux moyens de pilotage manuel 6, respectivement par les liaisons L1, L2 et L3. Les moyens de commutation C permettent de basculer soit en mode de pilotage automatique, soit en mode de pilotage manuel. Ils sont aptes à transmettre soit au pilote automatique 5, soit aux moyens de pilotage manuel 6, les valeurs de paramètres de vol qui ont été déterminées par le système de détermination 3 ; et
- le système de commande 7 pour ajuster le positionnement de la surface de contrôle 2. Ce système de commande 7 est apte à recevoir, par la liaison L4, des ordres de commande en provenance du pilote automatique 5 ou des moyens de pilotage manuel 6 et à ajuster, en conséquence, l'inclinaison de la surface de contrôle 2.

Selon l'invention, le système de détermination 3 de l'invention comporte :

- une unité 8 d'estimation de paramètres de vol préalablement sélectionnés, l'ensemble de ces paramètres de vol sélectionnés définissant un vecteur de mesures z(t) ; et
- une unité 9 de détermination de la valeur courante de paramètres de vol de l'aéronef, qui est apte à recevoir l'estimation ẑ(t) (la notation « ^ » désignant une estimation) du vecteur de mesures z(t) .

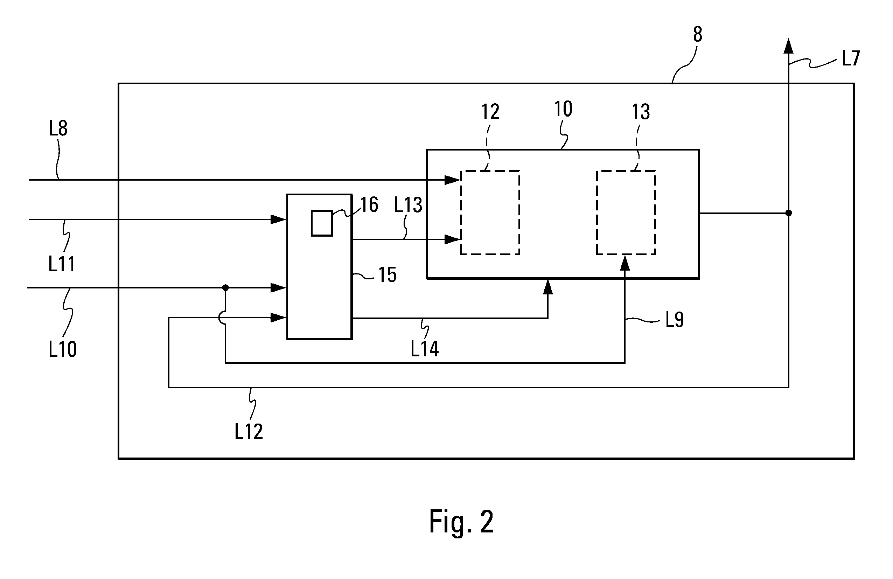

Comme le montre la figure 2, l'unité 8 d'estimation comporte un filtre de Kalman étendu 10, auquel sont associés un vecteur d'état $X(t)$, le vecteur de mesures $Z(t)$ et un vecteur de commande $U(t)$. Le filtre de Kalman 10 est défini par les équations suivantes :

$$\begin{cases} \dot{X}(t) = F(X(t),U(t)) + W(t) & \text{(Equation d'état)} \\ Z(t) = H(X(t),U(t)) + V(t) & \text{(Equation de mesure)} \end{cases}$$

dans lesquelles :

- F est la matrice d'états ;
- H est la matrice associée aux bruits de mesure ;
- W(t) est le vecteur de bruit d'évolution ;
- V(t) est le vecteur de bruit de mesure ; et
- la notation « • » désigne la dérivée par rapport au temps.

Dans l'exemple de réalisation du filtre de Kalman 10, le vecteur d'état $X(t)$ est défini par les douze paramètres de vol suivants :

- l'angle d'incidence $\alpha$ ;
- la vitesse $v$ de l'aéronef dans le repère terrestre (x,y,z) ;
- la vitesse $V$ de l'aéronef par rapport au sol ;

- la vitesse de tangage q;
- l'assiette longitudinale θ ;
- l'altitude *h* ;
- la poussée motrice brute $T_B$;
- le biais $b_{nx}$ projeté suivant la direction correspondant à l'accélération longitudinale *nx* ;
- le biais $b_{ny}$ projeté suivant la direction correspondant à l'accélération latérale *ny* ;
- la vitesse du vent $W_x$ selon l'axe x du repère terrestre (x,y,z) ;
- la vitesse du vent $W_y$ selon l'axe y du repère terrestre (x,y,z) ; et
- la vitesse du vent $W_z$ selon l'axe z du repère terrestre (x,y,z).

Le vecteur de mesures z(t) est, quant à lui, défini par les neuf paramètres de vol suivants :

- l'angle d'incidence aérodynamique $\alpha_a$ ;
- l'angle de dérapage aérodynamique $\beta_a$ ;
- la vitesse de l'air $V_a$ ;
- la vitesse de tangage *q* ;
- l'assiette longitudinale θ ;
- l'altitude *h* ; ;
- la vitesse verticale $V_z$ ;
- le facteur de charge normal *Nz* ;
- la vitesse *V* de l'aéronef par rapport au sol.

Selon l'invention, les paramètres de vol, qui définissent le vecteur de mesures Z(t), sont choisis parce qu'ils sont liées entre eux par l'intermédiaire d'équations de la mécanique du vol spécialement identifiées. Les équations de la mécanique du vol identifiées permettent ainsi d'établir un lien de dépendance entre les différents paramètres de vol choisis formant le vecteur de mesures Z(t).

Le filtre de Kalman étendu 10 est configuré à partir des équations de la mécanique de vol identifiées associées aux paramètres de vol sélectionnés formant le vecteur de mesures Z(t). Un paramétrage initial du filtre 10 est également effectué.

En outre, le vecteur de commande U(t) est formé par les seize paramètres de vol suivants :

- la vitesse de roulis *p* ;
- la vitesse de tangage *q*;
- la vitesse de lacet *r* ;
- l'angle de roulis φ ;
- l'assiette θ ;
- l'accélération longitudinale *nx* ;
- l'accélération latérale *ny* ;
- l'angle d'incidence α ;
- l'angle de dérapage β ;
- la vitesse de l'air $V_a$ ;
- la masse *M* de l'aéronef ;
- l'inertie *Iyy* ;
- la force de portance *FZa* ;
- le moment de tangage $M_a$ ;
- la poussée motrice statique brute réelle $T_{BS}$ ;
- le moment dû à la poussée motrice brute $M_{TB}$.

L'ensemble des valeurs des paramètres du vecteur de mesures Z(t) et du vecteur de commande U(t) définissent les entrées du filtre de Kalman étendu 10.

Le système de détermination 3 comporte un premier module 11 pour sélectionner, parmi les valeurs mesurées provenant de l'unité d'informations 4 qu'il a reçues par la liaison L5, celles qui vont former les entrées de l'unité d'estimation 8, et notamment du filtre de Kalman étendu 10. Autrement dit, le premier module de sélection 11 délivre, en sortie, les valeurs mesurées sélectionnées des paramètres d'entrée. Le premier module de sélection 11 délivre directement les valeurs mesurées du vecteur de commande U(t) au filtre de Kalman étendu 10, par l'intermédiaire de la liaison L8.

Tel qu'illustré sur la figure 2, le fonctionnement du filtre de Kalman 10 présente deux phases distinctes, à savoir :

- une phase de prédiction (représentée, de façon symbolique, par le bloc 12), au cours de laquelle les estimations

$\hat{X}(t)$ et $\hat{Z}(t)$ sont obtenues ; et

- une phase de mise à jour (représentée, de façon symbolique, par le bloc 13), dans laquelle les valeurs mesurées des paramètres formant le vecteur de mesures $Z(t)$ - reçues par la liaison L9 - sont utilisées pour corriger les estimations $\hat{X}(t)$ et $\hat{Z}(t)$ délivrées lors de la phase d'estimation (bloc 12).

Selon l'invention, le filtre de Kalman étendu 10 est formé pour délivrer en temps réel, lors d'un vol dudit aéronef, des estimations conjointes des paramètres de vol sélectionnés formant le vecteur de mesures $Z(t)$ (comme par exemple l'angle d'incidence aérodynamique $\alpha_a$ et la vitesse air $Va$).

Dans l'exemple de réalisation considéré, le filtre de Kalman étendu 10 est défini par les équations suivantes :

$$
\dot{X} = \begin{cases}
\dot{\alpha} = q + \cos\alpha\,(FZ_a - \sin\alpha_{a_m} T_B)\big/(mV\cos\alpha_{a_m}\cos\beta) - \tan\beta\,(p_m\cos\alpha - r_m\sin\alpha) \\
\quad ... + g\cos\alpha((\tan\alpha - \tan\alpha_{a_m})nx_m + \tan\alpha\sin\theta + \cos\theta\cos\varphi_m)\big/(V\cos\beta) \\
\dot{v} = V\cos\beta\,(p_m\sin\alpha - r_m\cos\alpha) - g(ny_m + b_{ny} - \cos\theta\sin\varphi_m) \\
\dot{V} = \sin\alpha\cos\beta\,(FZ_a - \sin\alpha_{a_m} T_B)\big/(m\cos\alpha_{a_m}) + V\sin\beta\,(\dot{v}/V + r_m\cos\alpha\cos\beta \\
\quad ... - p_m\sin\alpha\sin\beta) - g\cos\beta((\cos\alpha + \tan\alpha_{a_m}\sin\alpha)(nx_m + b_{nx}) + \cos\alpha\sin\theta - \sin\alpha\cos\theta\cos\varphi_m) \\
\dot{q} = (M_a + M_{T_B} - mgz_{cg}nx_m)\big/I_{yy} \\
\dot{\theta} = q\cos\varphi_m - r_m\sin\varphi_m \\
\dot{h} = Vz = V(\cos\alpha\cos\beta\sin\theta - \sin\beta\cos\theta\sin\varphi_m - \sin\alpha\cos\beta\cos\theta\cos\varphi_m) \\
\dot{T}_B = -\omega_{T_B}(T_B - T_{BS}) \\
\dot{b}_{nx} = \dot{b}_{ny} = \dot{W}_x = \dot{W}_y = \dot{W}_z = 0
\end{cases}
$$

et

$$
Z = \begin{cases}
\alpha_a = \tan^{-1}(w_a/u_a) \\
V_a = \left\|\vec{V}_a\right\| \\
\beta_a = \tan^{-1}(v_a\big/(u_a^2 + w_a^2)^{0,5}) \\
q = q_m \\
\theta = \theta_m \\
h = h_m \\
Vz = Vz \\
nz = \left(\left[\tan\alpha_{a_m}(T_B/mg + nx_m) - \dfrac{FZ_a}{mg\cos\alpha_{a_m}}\right]\left\|\vec{V}\right\|\right)^T + \omega(t) \\
V = \left\|\vec{V}\right\|
\end{cases}
$$

dans lesquelles :

- l'indice $m$ indique une valeur mesurée du paramètre correspondant ;
- $(u,v,w)$ sont respectivement les vitesses dans le repère terrestre $(x,y,z)$, telles que :

$$\begin{cases} u = V \cos\alpha \cos\beta \\ v = V \sin\beta \\ w = V \sin\alpha \cos\beta \end{cases}$$

- $(u_a, v_a, w_a)$ sont respectivement les vitesses air dans le repère terrestre $(x, y, z)$, telles que :

$$\begin{cases} u_a = u - \cos\theta \cos\psi_m W_x - \cos\theta \sin\psi_m W_y + \sin\theta.W_z \\ v_a = v - (\sin\theta \sin\varphi_m \cos\psi_m - \cos\varphi_m \sin\psi_m)W_x - (\sin\theta \sin\varphi_m \sin\psi_m + \cos\varphi_m \cos\psi_m)W_y \\ ... - \cos\theta \sin\varphi_m W_z \\ w_a = w - (\sin\theta \cos\varphi_m \cos\psi_m + \sin\varphi_m \sin\psi_m)W_x - (\sin\theta \sin\varphi_m \sin\psi_m - \sin\varphi_m \cos\psi_m)W_y \\ ... - \cos\theta \cos\varphi_m W_z \end{cases}$$

Le système de détermination 3 comprend également un premier module 14 de vérification qui reçoit, en entrée, les valeurs mesurées des paramètres du vecteur de mesures $Z(t)$, de manière à vérifier si les valeurs mesurées reçues sont admissibles, en fonction de critères d'admissibilité donnés, ou, au contraire, sont considérées défaillantes (par exemple parce qu'elles sont erronées ou incohérentes). Le premier module 14 de vérification est, par exemple, formé de comparateurs et de voteurs (non représentés sur la figure 2). Il est apte à délivrer, en sortie, un signal dans lequel sont répertoriées les valeurs mesurées défaillantes.

Bien que, dans le présent exemple, les premiers modules de sélection 11 et de vérification 14 soient disposés à l'extérieur de l'unité 8 d'estimation, ils pourraient, en variante, être intégrés à l'unité 8.

Par ailleurs, l'unité 8 d'estimation comprend un module 15 d'adaptation du paramétrage du filtre de Kalman étendu 10 qui reçoit, en entrée, les valeurs mesurées sélectionnées par le premier module de sélection 11, le signal de sortie du premier module 14 de vérification et l'estimation $\hat{Z}(t)$ du vecteur de mesures $Z(t)$ délivrée en sortie du filtre 10, par l'intermédiaire respectivement des liaisons L10, L11 et L12.

En cas de détection, par le premier module 14 de vérification, d'une ou plusieurs valeurs mesurées défaillantes du vecteur de mesures $Z(t)$, le module 15 d'adaptation délivre, en sortie par la liaison L13, les valeurs estimées correspondantes aux valeurs mesurées défaillantes - délivrées par le filtre de Kalman 10 - ainsi que les valeurs mesurées du vecteur de mesures $Z(t)$ admissibles. On substitue donc les valeurs mesurées défaillantes par les valeurs estimées correspondantes en entrée du filtre de Kalman étendu 10. Bien entendu, dès lors que la valeur mesurée défaillante redevient admissible, le module 15 d'adaptation peut délivrer la nouvelle valeur mesurée, en la substituant à la valeur estimée correspondante.

De plus, le filtre de Kalman étendu 10 est défini par les matrices suivantes :

- la matrice de covariance R liée aux bruits de mesure associée à la matrice diagonale du bruit de mesure V ; et
- la matrice de covariance Q liée aux bruits d'évolution associée à la matrice diagonale du bruit d'évolution W.

La matrice de covariance R liée aux bruits de mesure est définie par la relation $R = E[V(t)V(t)^T]$, où E désigne l'espérance mathématique. De façon semblable, la matrice de covariance Q liée aux bruits d'évolution est définie par la relation $Q = E[W(t)W(t)^T]$. Les matrices R et Q traduisent la confiance que l'on porte respectivement sur les mesures en provenance de l'unité d'informations 4 et sur l'estimation délivrée par le filtre de Kalman étendu 10.

Ainsi, en cas de détection, par le premier module de vérification 14, d'une défaillance d'une ou plusieurs valeurs mesurées du vecteur de mesures $Z(t)$, le module 15 d'adaptation est apte à adapter, en temps réel, la valeur courante des matrices de covariance R et Q, associées au filtre 10.

Il est à noter que, lors de l'apparition d'une panne sur les mesures, on fixe une valeur élevée sur le ou les lignes de la matrice R impactées par la défaillance et une valeur faible sur le ou les lignes de la matrice Q impactées par la défaillance. En effet, une valeur élevée de la matrice R signifie que l'on a plus confiance dans les mesures arrivant au filtre de Kalman 10, de sorte que l'on porte la confiance davantage sur l'estimation.

En outre, le module 15 d'adaptation comporte une mémoire 16 dans laquelle sont sauvegardés des couples de préréglage des matrices de covariance R et Q. Dans l'exemple de réalisation, chaque couple de préréglage est associé à une valeur mesurée défaillante prédéfinie du vecteur de mesures $Z(t)$. Chaque couple de préréglage peut permettre une adaptation sélective des matrices de covariance R et Q en ajustant, par exemple, uniquement les coefficients de ces matrices qui sont touchés par la valeur mesurée défaillante, par l'intermédiaire de la liaison L14.

Dans l'exemple de réalisation, on adapte simultanément les deux matrices de covariance R et Q. Bien entendu, en variante, on pourrait envisager d'adapter uniquement la matrice R, ou uniquement la matrice Q.

Il est à noter que les matrices Q et R sont initialisées par des valeurs prédéfinies, lors du paramétrage initial du filtre de Kalman étendu 10.

Par ailleurs, le système de détermination 3 comporte :

- un second module 17 pour sélectionner, parmi les valeurs mesurées des paramètres de vol reçues de l'unité d'informations 4 (liaison L6), celles pour lesquelles les paramètres de vol correspondants sont estimés par le filtre de Kalman étendu 10 (il s'agit donc des paramètres formant le vecteur de mesures $Z(t)$); et
- un second module 18 de vérification qui reçoit, en entrée par la liaison L15, les valeurs mesurées sélectionnées par le second module 17 de sélection. Le second module 18 de vérification, par exemple formé de comparateurs et de voteurs, est apte à vérifier si les valeurs mesurées reçues sont admissibles, en fonction de critères d'admissibilité donnés, ou, au contraire, sont considérées défaillantes (par exemple parce qu'elles sont erronées ou incohérentes). En cas de détection d'une défaillance d'au moins une des valeurs mesurées sélectionnées, le second module de détection 18 est apte à délivrer, en sortie, un signal dans lequel sont répertoriées la ou les valeurs mesurées défaillantes.

Bien que, dans le présent exemple, les seconds modules de sélection 17 et de vérification 18 soient disposés à l'extérieur de l'unité 9 de détermination, ils pourraient, en variante, être intégrés à l'unité 9.

Par ailleurs, dans une variante, les premier et second module de sélection 11 et 17 pourraient ne former qu'un seul et unique module de sélection. De même, les premier et second modules de vérification 14 et 18 pourraient, en variante, être intégrés l'un à l'autre pour ne former qu'un seul et unique module de vérification.

L'unité de détermination 4 comporte en outre un module 19 de détermination des valeurs courantes des paramètres de vol formant le vecteur de mesures z(t), qui reçoit les valeurs mesurées sélectionnées par le second module de sélection 17, le signal de défaillance délivré par le second module de vérification 18 et l'estimation z(t) du vecteur de mesures $Z(t)$ délivrée par l'unité 8 d'estimation, par l'intermédiaire des liaisons L16, L17 et L7. Ainsi, pour un paramètre de vol considéré du vecteur de mesures z(t), en cas de défaillance d'au moins une valeur mesurée associée audit paramètre de vol considéré, le module 19 est apte à déterminer la valeur courante dudit paramètre de vol considéré, à partir des valeurs sélectionnées restantes non défaillantes associées à ce paramètre de vol et de l'estimation dudit paramètre de vol considéré, et à la délivrer, en sortie, au pilote automatique 5 et aux moyens de pilotage manuel 6, par les liaisons L2 et L3. Pour cela, le module 19 de détermination peut également mettre en oeuvre des comparateurs et/ou des voteurs.

Ainsi, grâce à l'invention, même en cas d'indisponibilité totale de valeurs mesurées associées à un des paramètres de vol formant le vecteur de mesures $Z(t)$, une valeur courante, correspondant à la valeur estimées dudit paramètre par l'unité 8 d'estimation, peut tout de même être délivrée au pilote automatique 5 ou aux moyens de pilotage manuel 6, pour qu'ils ne soient pas privés de valeur d'entrée.

Par ailleurs, bien que le système de détermination de paramètres de vol conforme à l'invention ait été décrit en référence à une chaîne de commande d'une surface aérodynamique de contrôle, un tel système pourrait tout aussi bien être intégré dans d'autres chaînes de commande, par exemple une chaîne de commande du régime des moteurs.

**Revendications**

1. Procédé de détermination en temps réel de paramètres de vol d'un aéronef, au cours d'un vol de ce dernier, **caractérisé en ce que** l'on effectue les étapes suivantes :

   - on sélectionne au moins deux paramètres de vol dudit aéronef à estimer;
   - on identifie les équations de la mécanique du vol, associées respectivement aux paramètres de vol sélectionnés, pour lesquelles il existe un lien de dépendance entre lesdits paramètres de vol sélectionnés ;
   - à partir desdites équations de la mécanique du vol identifiées associées auxdits paramètres sélectionnés, on configure un filtre de Kalman étendu (10), qui reçoit des valeurs de paramètres d'entrée comprenant au moins lesdits paramètres de vol sélectionnés ; et
   - lors du vol dudit aéronef, on met en oeuvre le filtre de Kalman étendu (10) pour qu'il délivre, en sortie, des estimations conjointes desdits paramètres de vol sélectionnés.

2. Procédé selon la revendication 1, **caractérisé :**

- **en ce que** ledit filtre de Kalman est défini par les matrices suivantes :

  • la matrice de covariance R liée aux bruits de mesure associée à la matrice diagonale du bruit de mesure V ; et
  • la matrice de covariance Q liée aux bruits d'évolution associée à la matrice diagonale du bruit d'évolution W,

- et **en ce que** l'on effectue les étapes supplémentaires suivantes :

  • on vérifie que les valeurs desdits paramètres d'entrée sont admissibles ; et
  • en cas de détection d'une défaillance d'une valeur d'un paramètre d'entrée, on adapte, en temps réel, la valeur courante d'au moins un des éléments d'au moins une des matrices de covariance R et Q.

3. Procédé selon la revendication 2,
   **caractérisé :**

   - **en ce que** l'on définit, dans une étape préliminaire, une pluralité de préréglages des matrices de covariance R et Q liées respectivement aux bruits de mesure et d'évolution, lesdits préréglages ainsi définis étant chacun associés à une valeur défaillante d'un desdits paramètres d'entrée ; et
   - **en ce que**, pour adapter la valeur courante desdites matrices de covariance Q et R liées aux bruits de mesure et d'évolution en cas de détection d'une défaillance de la valeur d'un paramètre d'entrée, on attribue le préréglage prédéfini, correspondant à la valeur défaillante détectée, aux matrices de covariance R et Q liées aux bruits de mesure et d'évolution.

4. Procédé selon la revendication 2 ou 3,
   **caractérisé en ce que**, en cas de détection d'une défaillance d'une valeur d'un desdits paramètres d'entrée mesurée par un ou plusieurs capteurs embarqués à bord dudit aéronef, on substitue ladite valeur mesurée défaillante par la valeur correspondante estimée délivrée en sortie dudit filtre de Kalman étendu (10).

5. Procédé selon l'une des revendications 1 à 4,
   **caractérisé en ce que** l'on effectue les étapes suivantes :

   - on considère au moins un desdits paramètres de vol sélectionnés pour lequel ledit filtre de Kalman étendu (10) délivre une estimation ;
   - on sélectionne, parmi les valeurs des paramètres d'entrée dudit filtre de Kalman étendu (10), celles correspondant audit paramètre de vol considéré qui proviennent de capteurs embarqués à bord dudit aéronef ;
   - on détecte une incohérence attachée à au moins une desdites valeurs sélectionnées ;
   - on détermine la valeur courante dudit paramètre de vol sélectionné à partir de la ou des valeurs sélectionnées restantes et de l'estimation dudit paramètre de vol sélectionné, en excluant la ou les valeurs incohérentes détectées.

6. Procédé selon l'une des revendications 1 à 5,
   **caractérisé en ce que** le vecteur d'état associé audit filtre de Kalman étendu (10) est défini par les douze états suivants :

   - l'angle d'incidence $\alpha$ ;
   - la vitesse dans le repère terrestre $v$;
   - la vitesse par rapport au sol $V$ ;
   - la vitesse de tangage $q$;
   - l'assiette $\theta$ ;
   - l'altitude $h$ ;
   - la poussée motrice brute $T_B$;
   - le biais $b_{nx}$ projeté suivant la direction correspondant à l'accélération longitudinale $nx$ ;
   - le biais $b_{ny}$ projeté suivant la direction correspondant à l'accélération latérale $ny$ ;
   - la vitesse du vent $W_x$ selon l'axe x du repère terrestre (x,y,z) ;
   - la vitesse du vent $W_y$ selon l'axe y du repère terrestre (x,y,z) ; et
   - la vitesse du vent $W_z$ selon l'axe z du repère terrestre (x,y,z).

7. Procédé selon l'une des revendications 1 à 6,

**caractérisé en ce que** lesdits paramètres d'entrée du filtre de Kalman étendu (10) comportent des paramètres inertiels ($q$, $p$, $r$, $\varphi$, $\theta$, $h$, $Vz$, $V$, $nx$, $ny$, $Nz$), des paramètres anémométriques ($\alpha$, $\beta$, $\alpha_a\beta_a$, $Va$), des paramètres propres audit aéronef ($M$, $Iyy$) et des paramètres intermédiaires issus de modélisations embarquées ($FZa$, $Ma$, $T_{BS}$, $M_{TB}$).

8. Système de détermination, en temps réel, de paramètres de vol d'un aéronef, au cours d'un vol de ce dernier, qui comporte un filtre de Kalman étendu (10) apte à recevoir des valeurs de paramètres d'entrée, **caractérisé :**

   - **en ce que** ledit filtre de Kalman étendu (10) est configuré à partir d'équations de la mécanique de vol établissant un lien de dépendance entre au moins deux paramètres de vol dudit aéronef à estimer présélectionnés appartenant auxdits paramètres d'entrée ; et
   - **en ce que** ledit filtre de Kalman étendu (10) est formé pour délivrer, lors d'un vol dudit aéronef, des estimations conjointes desdits paramètres de vol sélectionnés.

9. Système selon la revendication 8,
   **caractérisé :**

   - **en ce que** ledit filtre de Kalman est défini par les matrices suivantes :

     ▪ la matrice de covariance R liée aux bruits de mesure associée à la matrice diagonale du bruit de mesure V ; et
     ▪ la matrice de covariance Q liée aux bruits d'évolution associée à la matrice diagonale du bruit d'évolution W,

   - et **en ce que** ledit système (3) comporte :

     ▪ des moyens (14) pour vérifier si les valeurs desdits paramètres d'entrée du filtre de Kalman étendu (10) sont admissibles ; et
     ▪ des moyens (15) pour adapter en temps réel, en cas de détection, par lesdits moyens de vérification (14), d'une défaillance d'une valeur d'un paramètre d'entrée, la valeur courante d'au moins une des matrices de covariance R et O.

10. Système selon la revendication 9,
    **caractérisé en ce qu'**il comporte en outre des moyens (15) pour remplacer la ou les valeurs défaillantes par leur valeur estimée par le filtre de Kalman étendu (10), lorsqu'elles sont disponibles.

11. Aéronef,
    **caractérisé en ce qu'**il comporte au moins un système (3) tel que spécifié sous l'une des revendications 8 à 10.

**Patentansprüche**

1. Verfahren zur Bestimmung von Flugparametern eines Luftfahrzeugs während eines Fluges desselben in Echtzeit, **dadurch gekennzeichnet, dass** die folgenden Schritte ausgeführt werden:

   - es werden mindestens zwei Flugparameter des Luftfahrzeugs ausgewählt, die zu schätzen sind;
   - es werden die den ausgewählten Flugparametern jeweils zugeordneten Gleichungen der Flugmechanik identifiziert, für welche ein Abhängigkeitsverhältnis zwischen den ausgewählten Flugparametern existiert;
   - ausgehend von den identifizierten Gleichungen der Flugmechanik, die den ausgewählten Parametern zugeordnet sind, wird ein erweitertes Kalman-Filter (10) konfiguriert, welches Werte von Eingangsparametern empfängt, die mindestens die ausgewählten Flugparameter umfassen; und
   - während des Fluges des Luftfahrzeugs wird das erweiterte Kalman-Filter (10) angewendet, damit dieses am Ausgang gemeinsame Schätzungen der ausgewählten Flugparameter liefert.

2. Verfahren nach Anspruch 1, **gekennzeichnet dadurch, dass** das Kalman-Filter durch die folgenden Matrizen definiert ist:

   • die mit dem Messrauschen zusammenhängende Kovarianzmatrix R, die der Diagonalmatrix des Messrauschens V zugeordnet ist; und

• die mit dem Prozessrauschen zusammenhängende Kovarianzmatrix Q, die der Diagonalmatrix des Prozessrauschens W zugeordnet ist,

und dadurch, dass die folgenden zusätzlichen Schritte ausgeführt werden:

• es wird überprüft, ob die Werte der Eingangsparameter zulässig sind; und
• im Falle der Erkennung der Fehlerhaftigkeit eines Wertes eines Eingangsparameters wird der aktuelle Wert mindestens eines der Elemente mindestens einer der Kovarianzmatrizen R und Q in Echtzeit angepasst.

3. Verfahren nach Anspruch 2, **gekennzeichnet:**

**dadurch, dass** in einem vorbereitenden Schritt mehrere Voreinstellungen der mit dem Mess- bzw. mit dem Prozessrauschen zusammenhängenden Kovarianzmatrizen R und Q definiert werden, wobei die so definierten Voreinstellungen jeweils einem fehlerhaften Wert eines der Eingangsparameter zugeordnet sind; und
dadurch, dass, um den aktuellen Wert der mit dem Mess- und dem Prozessrauschen zusammenhängenden Kovarianzmatrizen R und Q im Falle der Erkennung der Fehlerhaftigkeit des Wertes eines Eingangsparameters anzupassen, die vordefinierte Voreinstellung, die dem erkannten fehlerhaften Wert entspricht, den mit dem Mess- und dem Prozessrauschen zusammenhängenden Kovarianzmatrizen R und Q zugewiesen wird.

4. Verfahren nach Anspruch 2 oder 3,
**dadurch gekennzeichnet, dass** im Falle der Erkennung der Fehlerhaftigkeit eines durch einen oder mehrere an Bord des Luftfahrzeugs befindliche Sensoren gemessenen Wertes eines der Eingangsparameter der fehlerhafte Messwert durch den entsprechenden Schätzwert ersetzt wird, der am Ausgang des erweiterten Kalman-Filters (10) geliefert wird.

5. Verfahren nach einem der Ansprüche 1 bis 4,
**dadurch gekennzeichnet, dass** die folgenden Schritte ausgeführt werden:

- es wird mindestens einer der ausgewählten Flugparameter betrachtet, für den das erweiterte Kalman-Filter (10) eine Schätzung liefert;
- aus den Werten der Eingangsparameter des erweiterten Kalman-Filters (10) werden diejenigen ausgewählt, die dem betrachteten Flugparameter entsprechen und von Sensoren stammen, die sich an Bord des Luftfahrzeugs befinden;
- es wird eine Inkohärenz erkannt, die wenigstens einem dieser ausgewählten Werte anhaftet;
- es wird der aktuelle Wert dieses ausgewählten Flugparameters ausgehend von dem oder den übrigen ausgewählten Werten und der Schätzung dieses ausgewählten Flugparameters unter Ausschluss des oder der erkannten inkohärenten Werte(s) bestimmt.

6. Verfahren nach einem der Ansprüche 1 bis 5,
**dadurch gekennzeichnet, dass** der Zustandsvektor, der dem erweiterten Kalman-Filter (10) zugeordnet ist, durch die folgenden zwölf Zustände definiert ist:

- den Anstellwinkel $\alpha$;
- die Geschwindigkeit im terrestrischen Bezugssystem v;
- die Geschwindigkeit über dem Boden V;
- die Nickgeschwindigkeit q;
- die Trimmlage $\theta$;
- die Höhe h;
- den Bruttoschub $T_B$;
- die Neigung $b_{nx}$, projiziert entlang der Richtung, die der Längsbeschleunigung nx entspricht;
- die Neigung $b_{ny}$, projiziert entlang der Richtung, die der seitlichen Beschleunigung ny entspricht;
- die Windgeschwindigkeit Wx entlang der x-Achse des terrestrischen Bezugssystems (x,y,z);
- die Windgeschwindigkeit Wy entlang der y-Achse des terrestrischen Bezugssystems (x,y,z); und
- die Windgeschwindigkeit Wz entlang der z-Achse des terrestrischen Bezugssystems (x,y,z).

7. Verfahren nach einem der Ansprüche 1 bis 6,
**dadurch gekennzeichnet, dass** die Eingangsparameter des erweiterten Kalman-Filters (10) Trägheitsparameter ($q$, $p$, $r$, $\varphi$, $\theta$, $h$, $Vz$, $V$, $nx$, $ny$, $Nz$), anemometrische Parameter ($\alpha$, $\beta$, $\alpha_a$, $\beta_a$, $Va$), Eigenparameter des Luftfahrzeugs (M, Iyy) und Zwischenparameter, die von On-Board-Modellierungen stammen (FZa, Ma, $T_{BS}$, $M_{TB}$), umfassen.

8. System zur Bestimmung von Flugparametern eines Luftfahrzeugs während eines Fluges desselben in Echtzeit, welches ein erweitertes Kalman-Filter (10) aufweist, das geeignet ist, Werte von Eingangsparametern zu empfangen, **gekennzeichnet:**

   **dadurch, dass** das erweiterte Kalman-Filter (10) ausgehend von Gleichungen der Flugmechanik konfiguriert ist, die ein Abhängigkeitsverhältnis zwischen mindestens zwei vorgewählten zu schätzenden Flugparametern des Luftfahrzeugs herstellen, die zu den Eingangsparametern gehören; und
   dadurch, dass das erweiterte Kalman-Filter (10) dafür ausgebildet ist, während eines Fluges des Luftfahrzeugs gemeinsame Schätzungen der ausgewählten Flugparameter zu liefern.

9. System nach Anspruch 8, **gekennzeichnet:**

   **dadurch, dass** das Kalman-Filter durch die folgenden Matrizen definiert ist:

   • die mit dem Messrauschen zusammenhängende Kovarianzmatrix R, die der Diagonalmatrix des Messrauschens V zugeordnet ist; und
   • die mit dem Prozessrauschen zusammenhängende Kovarianzmatrix Q, die der Diagonalmatrix des Prozessrauschens W zugeordnet ist,

   und dadurch, dass das System (3) aufweist:

   • Mittel (14) zum Überprüfen, ob die Werte der Eingangsparameter des erweiterten Kalman-Filters (10) zulässig sind; und
   • Mittel (15) zum Anpassen, im Falle der Erkennung der Fehlerhaftigkeit eines Wertes eines Eingangsparameters durch die Überprüfungsmittel (14), des aktuellen Wertes mindestens einer der Kovarianzmatrizen R und Q in Echtzeit.

10. System nach Anspruch 9,
    **dadurch gekennzeichnet, dass** es außerdem Mittel (15) zum Ersetzen des oder der fehlerhaften Werte durch den durch das erweiterte Kalman-Filter (10) geschätzten Wert, falls sie verfügbar sind, aufweist.

11. Luftfahrzeug,
    **dadurch gekennzeichnet, dass** es mindestens ein System (3) nach einem der Ansprüche 8 bis 10 aufweist.


**Claims**

1. A method for improving the real-time determination of flight parameters of an aircraft, in the course of a flight of the latter, **characterized in that** the following steps are performed:

   - at least two flight parameters of said aircraft to be estimated are selected;
   - the flight mechanics equations which are associated respectively with the selected flight parameters and for which there exists a dependency relationship between said selected flight parameters are identified;
   - on the basis of said identified flight mechanics equations associated with said selected parameters, an extended Kalman filter (10) is configured, which receives values of input parameters comprising at least said selected flight parameters; and
   - during a flight of said aircraft, the extended Kalman filter (10) is implemented so that it delivers, as output, joint estimations of said selected flight parameters.

2. The method as claimed in claim 1,
   **characterized:**

   - **in that** said Kalman filter is defined by the following matrices:

     ▪ the covariance matrix R related to the measurement noise and associated with the diagonal matrix of the measurement noise V; and

- the covariance matrix Q related to the evolution noise and associated with the diagonal matrix of the evolution noise W,

- and **in that** the following additional steps are performed:

- it is verified that the values of said input parameters are admissible; and
- in the case of detection of a defect of a value of an input parameter, the current value of at least one of the elements of at least one of the covariance matrices R and Q is adapted, in real time.

3. The method as claimed in claim 2,
   **characterized:**

   - **in that**, in a preliminary step, a plurality of presettings of the covariance matrices R and Q related respectively to the measurement and evolution noise is defined, said presettings thus defined each being associated with a defective value of one of said input parameters; and
   - **in that**, to adapt the current value of said covariance matrices Q and R related to the measurement noise and evolution noise in the case of detection of a defect of the value of an input parameter, the predefined presetting, corresponding to the detected defective value, is assigned to the covariance matrices R and Q related to the measurement noise and evolution noise.

4. The method as claimed in claim 2 or 3,
   **characterized in that**, in the case of detection of a defect of a value of one of said input parameters measured by one or more sensors embedded aboard said aircraft, said defective measured value is substituted by the estimated corresponding value delivered as output of said extended Kalman filter (10).

5. The method as claimed in one of claims 1 to 4,
   **characterized in that** the following steps are performed:

   - at least one of said selected flight parameters for which said extended Kalman filter (10) delivers an estimation is considered;
   - from among the values of the input parameters of said extended Kalman filter (10) are selected those corresponding to said flight parameter considered which originate from sensors embedded aboard said aircraft;
   - an inconsistency tied to at least one of said selected values is detected;
   - the current value of said flight parameter selected is determined on the basis of the remaining selected value or values and of the estimation of said selected flight parameter, while excluding the detected inconsistent value or values.

6. The method as claimed in one of claims 1 to 5,
   **characterized in that** the state vector associated with said extended Kalman filter (10) is defined by the following twelve states:

   - the angle of incidence $\alpha$ ;
   - the speed in the terrestrial frame $v$;
   - the speed relative to the ground $V$ ;
   - the pitch rate $q$ ;
   - the attitude $\theta$ ;
   - the altitude $h$ ;
   - the net motive thrust $T_B$;
   - the bias $b_{nx}$ projected in the direction corresponding to the longitudinal acceleration $nx$;
   - the bias $b_{ny}$ projected in the direction corresponding to the lateral acceleration $ny$ ;
   - the wind speed $W_x$ along the x axis of the terrestrial frame;
   - the wind speed $W_y$ along the y axis of the terrestrial frame; and
   - the wind speed $W_z$ along the z axis of the terrestrial frame.

7. The method as claimed in one of claims 1 to 6,
   **characterized in that** said input parameters of the extended Kalman filter (10) comprise inertial parameters $(q,p,r,\varphi,\theta,h,Vz,V,nx,ny,Nz)$, anemometric parameters $(\alpha,\beta,\alpha_a,\beta_a,Va)$, parameters specific to said aircraft ($M$, $Iyy$) and intermediate parameters arising from onboard modelings ($FZa,Ha,T_{BS},M_{TB}$).

8. A system for determining, in real time, flight parameters of an aircraft, in the course of a flight of the latter, which comprises an extended Kalman filter (10) able to receive values of input parameters, **characterized:**

- **in that** said extended Kalman filter (10) is configured on the basis of flight mechanics equations establishing a dependency relationship between at least two preselected flight parameters of said aircraft to be estimated belonging to said input parameters; and
- **in that** said extended Kalman filter (10) is formed so as to deliver, during a flight of said aircraft, joint estimations of said selected flight parameters.

9. The system as claimed in claim 8,
**characterized:**

- **in that** said Kalman filter is defined by the following matrices:

   ▪ the covariance matrix R related to the measurement noise and associated with the diagonal matrix of the measurement noise V; and
   ▪ the covariance matrix Q related to the evolution noise and associated with the diagonal matrix of the evolution noise W,

- and **in that** said system (3) comprises:

   ▪ means (14) for verifying whether the values of said input parameters of the extended Kalman filter (10) are admissible; and
   ▪ means (15) for adapting in real time, in the case of detection, by said verification means (14), of a defect of a value of an input parameter, the current value of at least one of the covariance matrices R and Q.

10. The system as claimed in claim 9,
**characterized in that** it furthermore comprises means (15) for replacing the defective value or values by their value estimated by the extended Kalman filter 10), when they are available.

11. An aircraft,
**characterized in that** it comprises at least one system (3) such as specified under one of claims 8 to 10.

Fig. 1

Fig. 2

**EP 2 555 070 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5058836 A